# EUROPÄISCHE PATENTSCHRIFT

(11) **EP 1 749 063 B1**
(45) Veröffentlichungstag und Bekanntmachung des Hinweises auf die Patenterteilung: **08.12.2010**
(21) Anmeldenummer: 05738472.9
(22) Anmeldetag: 28.04.2005
(51) Int. Cl.: C09B 67/10

(54) **NACHBEHANDLUNG VON PIGMENTEN IN IONISCHEN FLÜSSIGKEITEN**
SECONDARY TREATMENT OF PIGMENTS IN IONIC LIQUIDS
POST-TRAITEMENT DE PIGMENTS DANS DES LIQUIDES IONIQUES

(30) Priorität: 14.05.2004 DE 102004024000
(43) Veröffentlichungstag der Anmeldung: 07.02.2007
(73) Patentinhaber: Clariant Produkte (Deutschland) GmbH, 65929 Frankfurt am Main (DE)
(72) Erfinder: MEHLTRETTER, Gerald, 65197 Wiesbaden (DE); METZ, Hans, Joachim, 64285 Darmstadt (DE); PLÜG, Carsten, 64342 Seeheim-Jugenheim/Ober-Beerbach (DE)
(74) Vertreter: Hütter, Klaus
(86) Internationale Anmeldenummer: PCT/EP2005/004541
(87) Internationale Veröffentlichungsnummer: WO 2005/111151

(56) Entgegenhaltungen:
- EP-A- 1 315 032
- EP-A- 1 315 038
- US-A- 6 048 388

## Beschreibung

Die vorliegende Erfindung liegt auf dem Gebiet organischer Buntpigmente.
Es ist bekannt, dass organische Pigmente, insbesondere Azopigmente, aus der Syntheselösung in kleinen unlöslichen Teilchen (Primärkristalliten) ausfallen, die noch einer Nachbehandlung (Finish) bedürfen. Dabei müssen physikalische Eigenschaften, wie Kristallform, Kristallgröße und -güte, sowie Teilchengrößenverteilung in Richtung auf ein gewünschtes Optimum verändert werden. Trocknet man nämlich einen Rohpigment-Presskuchen direkt nach der Synthese und dem Waschen, so lagern sich die Primärteilchen oft in erheblichem Maße zu Agglomeraten und Aggregaten zusammen. Das führt zu kornharten, farbschwachen und schlecht dispergierbaren Pigmenten, die sich oft auch durch Mahlung nicht mehr in eine anwendungstechnisch brauchbare Form bringen lassen.
Polycyclische Pigmente fallen aus der Syntheselösung meist als grobkristalline Rohpigmente aus, die anschließend durch geeignete Verfahren, wie z.B. Mahlung, feinverteilt werden müssen. Die so erhaltenen Präpigmente bedürfen in den meisten Fällen ebenfalls einer Nachbehandlung, um die gewünschten physikalischen Eigenschaften zu erzielen.

Der übliche Pigmentfinish ist eine thermische Nachbehandlung, wobei durch Erhitzen der Pigment-Rohsuspension oder des salzfrei gewaschenen, isolierten und wieder angeteigten Pigmentpresskuchens in Wasser und/oder organischen Lösemitteln eine bessere Ausbildung von Kristallen erreicht wird. Dabei wird der Feinstkornanteil, der besonders für die Agglomerationsneigung der Pigmente verantwortlich ist, verringert und folglich eine engere Korngrößenverteilung erzielt. In organischen Lösemitteln werden besonders schwerlösliche Pigmente bei Temperaturen von 80 bis 150°C nachbehandelt. Es werden dafür z.B. Alkohole, Eisessig, Chlorbenzol, o-Dichlorbenzol und Dimethylformamid verwendet.
Die bislang üblichen Finishverfahren sind apparativ und energetisch aufwendig, da oftmals unter Druck geheizt und das Lösungsmittel abdestilliert wird. Da organische Lösungsmittel meist brennbar sind, müssen entsprechende Maßnahmen zur Anlagensicherheit getroffen werden.

Die Aufgabe der vorliegenden Erfindung bestand darin, ein geeignetes Finishverfahren für organische Pigmente bereitzustellen, das im Hinblick auf Sicherheit, Umweltverträglichkeit und Resourceneinsatz dem bislang üblichen Lösemittelfinish überlegen ist.

Organische Salze, die bei Temperaturen von weniger als 100°C flüssig sind, werden als ionische Flüssigkeiten bezeichnet.

Es wurde nun gefunden, dass ionische Flüssigkeiten überraschenderweise ein geeignetes Finishmedium für organische Pigmente sind.

In der US,A, 6,048, 388werden Tintenstrahltinten hergestellt durch simples Mischen von Farbstoffen mit ionischen Flüssigkeiten

Gegenstand der vorliegenden Erfindung ist daher ein Verfahren zur Nachbehandlung organischer Pigmente, **dadurch gekennzeichnet, dass** man das gegebenenfalls gemahlene organische Rohpigment und eine oder mehrere ionische Flüssigkeiten aufeinander einwirken lässt.

Zweckmäßigerweise wird dabei so verfahren, dass man die nach der Pigmentsynthese oder die nach einer Feinverteilung, z.B. durch Mahlung, vorliegende Suspension des Rohpigments filtriert, wäscht, zum Pulverrohpigment trocknet und mit einer ionischen Flüssigkeit oder einer Mischung aus mehreren ionischen Flüssigkeiten versetzt.
Anstelle des getrockneten Pulverrohpigments kann auch ein wasserfeuchtes oder lösemittelfeuchtes Rohpigment, z.B. ein Filterkuchen oder Presskuchen, eingesetzt werden.

Die erfindungsgemäße Nachbehandlung wird zweckmäßigerweise in einem beheizbaren Reaktionsgefäß mit Rührvorrichtung durchgeführt. Die ionische Flüssigkeit kann in flüssiger oder in fester Form zum Rohpigment gegeben und dann die Mischung durch Heizen auf eine Temperatur oberhalb des Schmelzpunktes der ionischen Flüssigkeit gebracht werden. Der bevorzugte Temperaturbereich für die Nachbehandlung liegt zwischen 25°C und 280°C, bevorzugt zwischen 80 und 200°C.

Relativ zum Gewicht des Rohpigments wird die ionische Flüssigkeit zweckmäßig in einer Menge (ionische Flüssigkeit : Pigment) von (0,5 : 1) bis (30 : 1), bevorzugt (1 : 1) bis (20 : 1), eingesetzt.

Beim Einsatz von wasserfeuchtem oder lösemittelfeuchtem Rohpigment kann das Wasser oder das Lösemittel während der Nachbehandlung im Gemisch verbleiben oder aus dem Gemisch durch Destillation vor oder während der Nachbehandlung entfernt werden.

Es kann vorteilhaft sein, bei der Nachbehandlung zusätzliche Mengen an Wasser oder organischen Lösemitteln, wie z.B. Kohlenwasserstoffen, Alkoholen, Ethern, Aminen, Carbonsäuren, Carbonsäureestern oder -amiden, wie z.B. N-Methylpyrrolidon, zuzusetzen. Der Anteil an Wasser oder organischem Lösemittel kann dabei im Bereich von 1 bis 90 Gew.-%, bevorzugt im Bereich von 5 bis 50 Gew.-%, bezogen auf die Gesamtmenge der Pigmentsuspension, liegen.
Die Dauer der Nachbehandlung kann in weiten Grenzen schwanken, zweckmäßig sind 10 Minuten bis 10 Stunden, vorzugsweise 30 Minuten bis 5 Stunden.

Anschließend wird das Pigment durch Filtration von der ionischen Flüssigkeit abgetrennt. Es kann vorteilhaft sein, vor der Filtration Wasser oder ein organisches Lösemittel z.B. aus der Gruppe der Kohlenwasserstoffe, Alkohole, Ether, Amine, Carbonsäuren, Carbonsäureester oder -amide, wie z.B. N-Methylpyrrolidon zuzusetzen, um die Filtration zu erleichtern. Aus dem Filtrat kann die ionische Flüssigkeit durch Extraktion oder durch Abdestillieren von Wasser und/oder organischen Lösemitteln zurückgewonnen und erneut für die Nachbehandlung von Pigmenten eingesetzt werden.

Die ionische Flüssigkeit kann mit Wasser mischbar oder unmischbar sein. Als ionische Flüssigkeiten kommen organische Salze in Betracht, die einen Schmelzpunkt von weniger als 100°C besitzen und die mit der allgemeinen Formel

[A]ₙ⁺[B]ⁿ⁻

beschrieben werden können, wobei
n = 1, 2 oder 3 ist und
[B]ⁿ⁻ ein organisches oder ein anorganisches Anion ist, ausgewählt aus der Gruppe Halogenid, Borat, Phosphat, Phosphonat, Antimonat, Arsenat, Zinkat, Cuprat, Aluminat, Carbonat, Alkylcarbonat, Alkylsulfonat, Sulfat, Alkylsulfat, Alkylethersulfat, Amid, Imid, Carbanion und anionischer Metallkomplex;
[A]⁺ ein Kation ist, ausgewählt aus
- Ammonium-Kationen der allgemeinen Formel

   [NR¹R²R³R⁴]⁺,
- Phosphonium-Kationen der allgemeinen Formel

   [PR¹R²R³R⁴]⁺,
- Imidazolium-Kationen der allgemeinen Formel 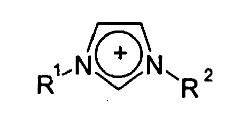 wobei der lmidazol-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl,
- Pyrrolidinium-Kationen der allgemeinen Formel 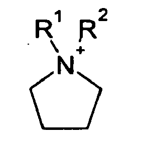
- Pyridinium-Kationen der allgemeinen Formel 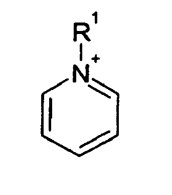 wobei der Pyridin-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl,
- Pyrazolium-Kationen der allgemeinen Formel 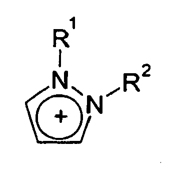 wobei der Pyrazol-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl,
- Triazolium-Kationen der allgemeinen Formel 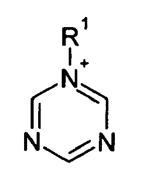 wobei der Triazol-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl,
- Guanidinium-Kationen der allgemeinen Formel 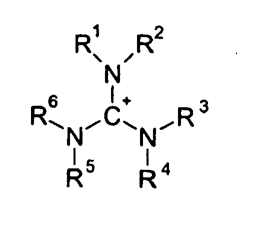
- Isouronium-Kationen der allgemeinen Formel 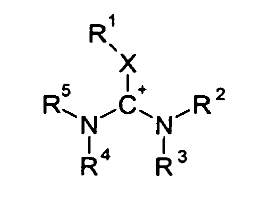 wobei X ausgewählt ist aus der Gruppe Sauerstoff und Schwefel; und die Reste R¹, R², R³, R⁴, R⁵, R⁶ unabhängig voneinander ausgewählt sind aus der Gruppe:
- Wasserstoff,
- lineare oder verzweigte, gesättigte oder ungesättigte, aliphatische oder alicyclische Alkylgruppen mit 1 bis 20 Kohlenstoffatomen,
- Heteroarylgruppen mit 3 bis 8 Kohlenstoffatomen im Heteroaryl-Rest und wenigstens einem Heteroatom ausgewählt aus N, O und S, das mit wenigstens einer Gruppe ausgewählt aus C₁-C₆-Alkylgruppen und/oder Halogenatomen substituiert sein kann;
- Arylgruppen mit 6 bis 12 Kohlenstoffatomen im Arylrest, die gegebenenfalls mit wenigstens einer C₁-C₆-Alkylgruppe und/oder einem Halogenatom substituiert sein können.

Bevorzugte Anionen der ionischen Flüssigkeiten sind Chlorid (Cl⁻), Bromid (Br⁻), Tetrafluoroborat ([BF₄]⁻), Tetrachloroborat ([BCl₄]⁻), Tetracyanoborat ([B(CN)₄]⁻), Bis[oxolato(2-)]-borat ([B(OOC-COO)₂]⁻), Bis[malonato(2-)]-borat ([B(OOC-CH₂-COO)₂]⁻), Bis[1,2-benzoldiolato(2-)-O,O']-borat ([B(O-C₆H₄-O)₂]⁻), Bis[2,2'-biphenyldiolato(2-)-O,O']-borat ([B(O-C₆H₄-C₆H₄-O)₂]⁻); Bis[salicylato(2-)]-borat ([B(O-C₆H₄-COO)₂]⁻), Hexafluorophosphat ([PF₆]⁻), Tris(pentafluoroethyl)-trisfluoro-phosphat ([(C₂F₅)₃PF₃]⁻), Tris(heptafluoropropyl)-trisfluoro-phosphat ([(C₃F₇)₃PF₃]⁻), Tris(nonafluorobutyl)-trisfluoro-phosphat ([(C₄F₉)₃PF₃]⁻), Bis(pentafluoroethyl)-phosphonat ([(C₂H₅)₂P(O)O]⁻), Bis(2,4,4-trimethyl-pentyl)-phosphonat ([(C₈H₁₇)₂P(O)O]⁻), Hexafluoroantimonat ([SbF₆]⁻), Hexafluoroarsenat ([SbF₆]⁻), Tetrachlorozinkat ([ZnCl₄]⁻), Dichlorocuprat ([CuCl₂]⁻), Tetrachloroaluminat ([AlCl₄]⁻), Carbonat ([CO₃]²⁻), Decanoat (C₁₀H₂₁C0₂]⁻), Triflat ([CF₃SO₃]⁻), Nonaflat ([C₂F₅SO₃]⁻), Tosylat ([CH₃-C₆H₄-SO₃]⁻), Sulfat ([SO4]²⁻), Methylsulfat ([CH₃SO₄]⁻), Diethylenglycolmonomethylethersulfat ([CH₃-(OCH2CH₂)₂-SO₄]⁻), Dicyanamid ([(CN)₂N]⁻), Bis(trifluormethyl)imid ([(CF₃)₂N]⁻), Bis(trifluormethylsulfonyl)imid ([(CF₃SO₂)₂N]⁻), Bis(trifluormethylsulfonyl)methan ([(CF₃SO₂)₂CH]⁻), Tris(trifluormethylsulfonyl)-methid ([(CF₃SO₂)₃C]⁻), Cobalt-tetracarbonyl ([Co(CO)₄]⁻].

Bevorzugte organische Kationen der ionischen Flüssigkeiten sind Tetramethylammonium, Tetraethyl-ammonium, Tetrabutyl-ammonium, Trioctyl-methylammonium, 1,1-Dimethyl-pyrrolidinium, 1-Ethyl-1-methyl-pyrrolidinium, 1-Butyl-1-methyl-pyrrolidinium, 1-Butyl-1-ethyl-pyrrolidinium, 1-Hexyl-1-methyl-pyrrolidinium, 1-Octyl-1-methyl-pyrrolidinium, 1,1-Dipropyl-pyrrolidinium, 1,1-Dibutylpyrrolidinium, 1,1-Dihexylpyrrolidinium, Tetrabutyl-phosphonium, Trihexyl-(tetradecyl)-phosphonium, Triisobutyl-methyl-phosphonium, Benzyl-triphenylphosphonium, 1-Methyl-imidazolium, 1-Butylimidazolium, 1,3-Dimethylimidazolium, 1-Ethyl-3-methyl-imidazolium, 1-Butyl-3-methyl-imidazolium, 1-Pentyl-3-methyl-imidazolium, 1-Hexyl-3-methyl-imidazolium, 1-Methyl-3-octyl-imidazolium, 1-Decyl-3-methyl-imidazolium, 1-Dodecyl-3-methyl-imidazolium, 1-Methyl-3-tetradecyl-imidazolium, 1-Hexadecyl-3-methyl-imidazolium, 1-Methyl-3-octadecyl -imidazolium, 1-Benzyl-3-methyl-imidazolium, 1-Methyl-3-(3'-phenylpropyl)-imidazolium, 1,2-Dimethyl-3-propyl-imidazolium, 1-Ethyl-2,3-dimethyl-imidazolium, 1-Butyl-2,3-dimethyl-imidazolium, 1-Hexyl-2,3-dimethyl-imidazoüum, 1-Hexadecyl-2,3-dimethyl-imidazolium, N-Ethyl-pyridinium, N-Butyl-pyridinium, 3-Methyl-N-butyl-pyridinium, 4-Methyl-N-butyl-pyridinium, 3,4-Dimethyl-N-butyl-pyridinium, 3,5-Dimethyl-N-butyl-pyridinium, 3-Ethyl-N-butyl-pyridinium, N-Hexyl-pyridinium, 3-Methyl-N-hexyl-pyridinium, 4-Methyl-N-hexyl-pyridinium, N-Octyl-pyridinium, 3-Methyl-N-octyl-pyridinium, 4-Methyl-N-octyl-pyridinium, Diethylpyrazolium, Ethyltriazolium, Guanidinium, N,N,N',N'-Tetramethyl-N"-ethylguanidinium, N-Pentamethyl-N-isopropylguanidinium, N-Pentamethyl-N-propylguanidinium, Hexamethylguanidinium, O-Methyl-N,N,N',N'-tetramethylisouronium, O-Ethyl-N,N,N',N'-tetramethylisouronium, S-Ethyl-N,N,N',N'-tetramethylisothiouronium.

Die erfindungsgemäße Nachbehandlung kann bei allen organischen Buntpigmenten, wie Azopigmenten und polycyclischen Pigmenten, vorgenommen werden. Azopigmente können Monoazo-, Disazo-, Disazokondensations-, Naphthol- oder Metallkomplexpigmente sein.

Als Azopigmente kommen insbesondere C.I. Pigment Yellow 16, 32, 83, 97, 120, 151, 154, 155, 175, 180, 181, 191, 194, 213, Pigment Orange 34, 36, 38, 62, 72, 74, Pigment Red 53:2, 112, 122, 137, 144, 170, 171, 175, 176, 185, 187, 188, 208, 214, 242, 247, 253; Pigment Violet 32; Pigment Brown 25 in Betracht.

Polycyclische Pigmente können z.B. Isoindolinon-, Isoindolin-, Anthanthron-, Thioindigo-, Chinophthalon-, Anthrachinon-, Dioxazin-, Phthalocyanin-, Chinacridon-, Perylen-, Perinon-, Diketopyrrolopyrrol-, Thiazinindigo- und Azomethin-Pigmente sein, insbesondere Pigment Violet 19, 23, Pigment Blue 15, Pigment Green 7, 36, 37, Pigment Red 122, 179, 202, 254, Pigment Yellow 139.

Es zeigte sich, dass die erfindungsgemäße Nachbehandlung den bislang üblichen wässrigen oder Lösemittel-Finish ersetzen kann. Darüber hinaus können sich bei einigen Pigmenten, in Abhängigkeit von Temperatur, Druck, Behandlungsdauer und Wasserzugabe, überraschenderweise noch weitere physikalische Eigenschaften ändern, wie z.B. die Kristallmodifikation oder das Verhältnis der gebildeten Kristallmodifikationen.

So entsteht z.B. aus rohem P.R. 170 der α-Phase durch die erfindungsgemäße Nachbehandlung ein P.R. 170 der β-Phase oder der γ-Phase oder einem Gemisch der β-Phase und der γ-Phase.

Analog entsteht z.B. aus rohem P.Y. 213 der β-Phase durch die erfindungsgemäße Nachbehandlung ein P.Y 213 der α-Phase.
In den nachfolgenden Beispielen wurden die coloristischen Eigenschaften der erhaltenen Pigmentproben im Alkyd-Melamin-Einbrennlack AM 5 durch Vergleichsmessungen bestimmt; als Referenz dienten jeweils die unbehandelten Proben.

Die Bewertung der Aufhellung erfolgte durch farbmetrische Messung der CIELAB-System gemäß DIN 6174; gemessen wurde an einem PCM-Gerät der Firma Gardner, wobei jeweils der Mittelwert aus drei Einzelwerten gebildet wurde. Die Bewertung des Volltons wurde visuell unter einer Abmusterungslampe entsprechend ASTM D1729 mit Tageslicht (CIE D65) durchgeführt.
Die Bestimmung der Kristallmodifikation der erhaltenen Pigmente erfolgte durch Röntgenpulverdiffraktometrie.

Zum Einsatz kamen folgende ionische Flüssigkeiten:

| Name | Kation | Anion |
|---|---|---|
| ®ECOENG 41M ¹⁾ | Butyl-methyl-imidazolium | Diethylenglycolmonomethylethersulfat |
| [BMIM][PF₆] ¹⁾ | Butyl-methyl-imidazolium | Tetrafluoroborat |
| ®CYPHOS 3653 ²⁾ | Tri-hexyl-tetradecylphosphonium | Chlorid |

| | | |
|---|---|---|
| ¹⁾ Firma Solvent Innovation ²⁾ Firma Cytec | | |

### Beispiele 1 bis 4: Finish von P.R. 170 (Trockenpigment) mit ECOENG 41 M

22,7 g Rohpigment P.R. 170 (Pulver, α-Phase) wurden in einem 2 1-Kolben mit 200 ml ECOENG 41 M vermischt und 30 Minuten bei RT verrührt. Die Mischung wurde innerhalb von 10 Minuten auf 120°C erhitzt und 2 Stunden bei dieser Temperatur gerührt. Dann wurde die Mischung mit 200 ml Wasser versetzt, heiß abfiltriert und mit 1200 ml Wasser gewaschen. Der Pigmentpresskuchen wurde 16 Stunden bei 100°C getrocknet, man erhält 22,3 g P.R. 170 als Gemisch der β-Phase und der γ-Phase (Verhältnis etwa 95:5).
Das Filtrat wurde über Celite und Aktivkohle filtriert und anschließend das Wasser abdestilliert, um die ionische Flüssigkeit zurückzugewinnen.
Gemäß nachstehender Tabelle wurden die Finishbedingungen variiert:

| Bsp. | Finishbed. | | Finishmedium | Kristallphase | Farbton ^{*)} | Deckkraft ^{*)} |
|---|---|---|---|---|---|---|
| Nr. | t [h] | T[°C] | | | | |
| 1 | 2 | 120 | ECOENG 41 M | 95% beta, 5% gamma | Spur gelber | Spur deckender |
| 2 | 2 | 150 | ECOENG 41 M | 70% beta, 30% gamma | Spur gelber | Spur deckender |
| 3 | 0.5 | 160 | ECOENG 41 M | 50% beta 50% gamma | deutlich gelber | deutlich deckender |
| 4 | 2 | 170 | ECOENG 41 M | 10% beta 90% gamma | deutlich gelber | etwas deckender |

| | | | | | | |
|---|---|---|---|---|---|---|
| *) gegenüber P.R.170, 100% beta-Phase | | | | | | |

### Beispiel 5: Finish von P. R. 170 (feuchter Presskuchen) mit ECOENG 41M

Es wurde gemäß Beispiel 1 verfahren, aber anstelle des getrockneten Rohpigments wurden 136 g Rohpigment P. R. 170 als wasserfeuchter Presskuchen (alpha-Phase) eingesetzt. Die Mischung aus Rohpigment, ECOENG 41 M und Wasser wurde innerhalb von 10 Minuten auf 110°C erhitzt und 30 Minuten bei dieser Temperatur gerührt, dabei wurde das Wasser mittels eines Rückflusskühlers in der Mischung gehalten. Nach der Aufarbeitung analog Beispiel 1 erhält man 22,3 g P.R. 170 in der beta-Phase.

### Beispiel 6: Finish von P.R. 170 (Trockenpigment) mit [BMIM][PF₆]

Es wurde gemäß Beispiel 1 verfahren, aber anstelle von 200 ml ECOENG 41 MTM wurden 200 ml [BMIM][PF₆] verwendet und die Mischung für 2 Stunden auf 150°C erhitzt. Man erhält 22,5 g P.R. 170 in der beta-Phase.

### Beispiel 7: Finish von P.R. 170 (Trockenpigment) mit CYPHOS 3653

Es wurde gemäß Beispiel 6 verfahren, aber anstelle von 200 ml [BMIM][PF₆] wurden 200 ml CYPHOS 3653 verwendet. Man erhält 22.4 g P.R. 170 in der beta-Phase.
Unter der alpha-Phase von P.R. 170 wird diejenige Kristallmodifikation verstanden, die sich durch folgende charakteristische Linien im Röntgenpulverdiagramm auszeichnet (Cu-K_{α}-Strahlung, 20-Werte in Grad): 7.6 (stark), 25.7 (stark), 5.2, 8.2, 11.7, 13.5, 15.9, 18.9, 23.5 (alle mittelstark).
Unter der beta-Phase versteht man diejenige Kristallmodifikation von P.R. 170, die sich durch folgende charakteristische Linien im Röntgenpulverdiagramm auszeichnet: 25.5 (stark), 7.1, 8.2, 11.3, 12.8, 15.1, 17.9 (alle schwach).
Die gamma-Phase zeichnet sich durch folgende Linien aus: 25.7 (stark), 7.3, 11.3, 12.9, 15.4, 18.2 (alle mittelstark).
Alle Linienlagen aller Modifikationen aller Pigmente sind mit einer Ungenauigkeit von ± 0.2° behaftet.

### Beispiel 8: Finish von P.Y. 213 (Trockenpigment) mit ECOENG 41 M

Es wurde wie in Beispiel 1 verfahren, jedoch wurde P.Y. 213 (Pulver, beta-Phase) statt P. R. 170 eingesetzt und die Mischung für 2 Stunden auf 150°C erhitzt. Man erhält 22,5 g P. Y. 213 in der alpha-Phase.
Das durch die Nachbehandlung entstandene Pigment zeichnet sich gegenüber der unbehandelten Form (brauner Farbton) durch einen brillanten gelben Farbton aus.

### Beispiel 9: Finish von Kupferphthalocyanin (Rohblau) mit ECOENG 41 M

Es wurde wie in Beispiel 1 verfahren, jedoch wurden 25g Kupferphthalocyanin (Rohblau) statt P.R. 170 eingesetzt und die Mischung für 3 Stunden auf 130°C erhitzt. Man erhält 24,4 g Kupferphthalocyanin in der beta-Phase.
Das durch die Nachbehandlung entstandene Pigment zeichnet sich gegenüber der unbehandelten Form (trübes Blau) durch einen brillanten grünstichig-blauen Farbton aus.

### Beispiel 10: Finish von Kupferphthalocyanin (Rohblau) mit CYPHOS 3653

Es wurde wie in Beispiel 9 verfahren, jedoch wurde CYPHOS 3653 anstelle von ECOENG 41 M verwendet. Man erhält 21,7 g Kupferphthalocyanin in der beta-Phase als brillantes, grünstichig-blaues Pigment.

## Patentansprüche

1. Verfahren zur Nachbehandlung organischer Pigmente, **dadurch gekennzeichnet, dass** man das gegebenenfalls gemahlene organische Rohpigment und eine oder mehrere ionische Flüssigkeiten aufeinander einwirken lässt.

2. Verfahren nach Anspruch 1, **dadurch gekennzeichnet, dass** die ionische Flüssigkeit die allgemeine Formel
[A]ₙ⁺[B]ⁿ⁻
aufweist, wobei
n = 1, 2 oder 3 ist und
[B]ⁿ⁻ ein organisches oder ein anorganisches Anion ist, ausgewählt aus der Gruppe Halogenid, Borat, Phosphat, Phosphonat, Antimonat, Arsenat, Zinkat, Cuprat, Aluminat, Carbonat, Alkylcarbonat, Alkylsulfonat, Sulfat, Alkylsulfat, Alkylethersulfat, Amid, Imid, Carbanion und anionischer Metallkomplex;
[A]⁺ ein Kation ist, ausgewählt aus
- Ammonium-Kationen der allgemeinen Formel
[NR¹R²R³R⁴]⁺,
- Phosphonium-Kationen der allgemeinen Formel
[PR¹R²R³R⁴]⁺,
- Imidazolium-Kationen der allgemeinen Formel 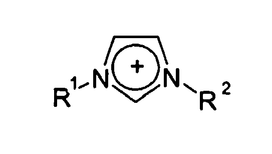 wobei der Imidazol-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl;
- Pyrrolidinium-Kationen der allgemeinen Formel 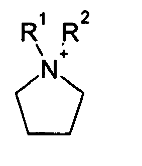
- Pyridinium-Kationen der allgemeinen Formel 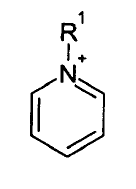 wobei der Pyridin-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl,
- Pyrazolium-Kationen der allgemeinen Formel 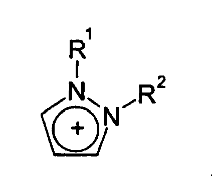 wobei der Pyrazol-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl,
- Triazolium-Kationen der allgemeinen Formel 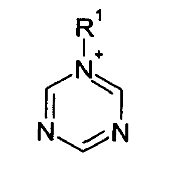 wobei der Triazol-Kern substituiert sein kann mit wenigstens einem Rest aus der Gruppe C₁-C₆-Alkyl, C₁-C₆-Alkoxy, C₁-C₆-Aminoalkyl, C₆-C₁₂-Aryl oder C₆-C₁₂-Aryl-C₁-C₆-Alkyl,
- Guanidinium-Kationen der allgemeinen Formel 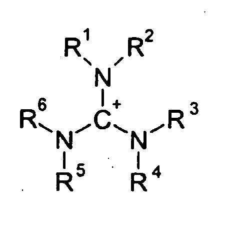
- Isouronium-Kationen der allgemeinen Formel 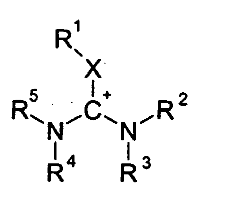 wobei X ausgewählt ist aus der Gruppe Sauerstoff und Schwefel und die Reste R¹, R², R³, R⁴, R⁵, R⁶ unabhängig voneinander ausgewählt sind aus der Gruppe:
- Wasserstoff,
- lineare oder verzweigte, gesättigte oder ungesättigte, aliphatische oder alicyclische Alkylgruppen mit 1 bis 20 Kohlenstoffatomen,
- Heteroarylgruppen mit 3 bis 8 Kohlenstoffatomen im Heteroaryl-Rest und wenigstens einem Heteroatom ausgewählt aus N, O und S, das mit wenigstens einer Gruppe ausgewählt aus C₁-C₆-Alkylgruppen und/oder Halogenatomen substituiert sein kann;
- Arylgruppen mit 6 bis 12 Kohlenstoffatomen im Arylrest, die gegebenenfalls mit wenigstens einer C₁-C₆-Alkylgruppe und/oder einem Halogenatom substituiert sein können.

3. Verfahren nach Anspruch 1 oder 2, **dadurch gekennzeichnet, dass** das Rohpigment in Form eines Pulvers, Filterkuchens oder Presskuchens eingesetzt wird.

4. Verfahren nach einem oder mehreren der Ansprüche 1 bis 3, **dadurch gekennzeichnet, dass** die Nachbehandlung mit ionischen Flüssigkeiten bei einer Temperatur zwischen 25 und 280°C durchgeführt wird.

5. Verfahren nach einem oder mehreren der Ansprüche 1 bis 4, **dadurch gekennzeichnet, dass** die Nachbehandlung mit ionischen Flüssigkeiten bei einer Temperatur zwischen 80 und 200°C durchgeführt wird.

6. Verfahren nach einem oder mehreren der Ansprüche 1 bis 5, **dadurch gekennzeichnet, dass** die Gewichtsmenge ionische Flüssigkeit : Pigment zwischen 0,5:1 und 30:1 liegt.

7. Verfahren nach einem oder mehreren der Ansprüche 1 bis 6, **dadurch gekennzeichnet, dass** die Dauer der Nachbehandlung 10 Minuten bis 10 Stunden beträgt.

8. Verfahren nach einem oder mehreren der Ansprüche 1 bis 7, **dadurch gekennzeichnet, dass** die Nachbehandlung in Gegenwart von Wasser oder organischem Lösemittel durchgeführt wird.

9. Verfahren nach Anspruch 8, **dadurch gekennzeichnet, dass** die Menge an Wasser oder organischem Lösemittel 1 bis 90 Gew.-%, bezogen auf die Gesamtmenge der Pigmentsuspension, beträgt.

10. Verfahren nach einem oder mehreren der Ansprüche 1 bis 9, **dadurch gekennzeichnet, dass** das Pigment ein Azopigment oder ein polycyclisches Pigment ist.

## Claims

1. A process for the finishing treatment of organic pigments which comprises allowing the optionally milled raw organic pigment and one or more ionic liquids to act on one another.

2. The process as claimed in claim 1, wherein the ionic liquid has the formula
[A]ₙ⁺[B]ⁿ⁻
where
n = 1, 2 or 3 and
[B]ⁿ⁻ is an organic or inorganic anion selected from the group consisting of halide, borate, phosphate, phosphonate, antimonate, arsenate, zincate, cuprate, aluminate, carbonate, alkylcarbonate, alkylsulfonate, sulfate, alkylsulfate, alkyl ether sulfate, amide, imide, carbanion and anionic metal complexes;
[A]⁺ is a cation selected from among
- ammonium cations of the formula
[NR¹R²R³R⁴]⁺,
- phosphonium cations of the formula
[PR¹R²R³R⁴]⁺,
- imidazolium cations of the formula 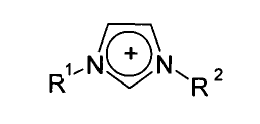 where the imidazole ring can be substituted by at least one radical from the group consisting of C₁-C₆-alkyl, C₁-C₆-alkoxy, C₁-C₆-aminoalkyl, C₆-C₁₂-aryl or C₆-C₁₂-aryl-C₁-C₆-alkyl,
- pyrrolidinium cations of the formula 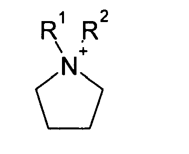
- pyridinium cations of the formula 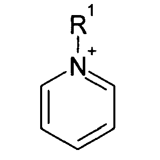 where the pyridine ring can be substituted by at least one radical from the group consisting of C₁-C₆-alkyl, C₁-C₆-alkoxy, C₁-C₆-aminoalkyl, C₆-C₁₂-aryl or C₆-C₁₂-aryl-C₁-C₆-alkyl,
- pyrazolium cations of the formula 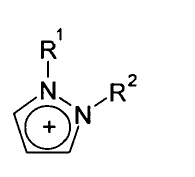 where the pyrazole ring can be substituted by at least one radical from the group consisting of C₁-C₆-alkyl, C₁-C₆-alkoxy, C₁-C₆-aminoalkyl, C₆-C₁₂-aryl or C₆-C₁₂-aryl-C₁-C₆-alkyl,
- triazolium cations of the formula 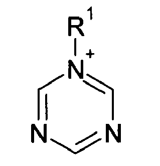 where the triazole ring can be substituted by at least one radical from the group consisting of C₁-C₆-alkyl, C₁-C₆-alkoxy, C₁-C₆-aminoalkyl, C₆-C₁₂-aryl or C₆-C₁₂-aryl-C₁-C₆-alkyl,
- guanidinium cations of the formula 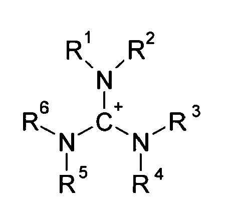
- isouronium cations of the formula 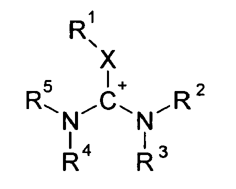 where X is selected from the group consisting of oxygen and sulfur;
and the radicals R¹, R², R³, R⁴, R⁵, R⁶ are selected independently from the group consisting of:
- hydrogen,
- linear or branched, saturated or unsaturated, aliphatic or alicyclic alkyl groups having from 1 to 20 carbon atoms,
- heteroaryl groups having from 3 to 8 carbon atoms in the heteroaryl radical and at least one heteroatom selected from among N, O and S which may be substituted by at least one group selected from among C₁-C₆-alkyl groups and halogen atoms;
- aryl groups which have from 6 to 12 carbon atoms in the aryl radical and may be substituted by at least one C₁-C₆-alkyl group and/or a halogen atom.

3. The process as claimed in claim 1 or 2, wherein the raw pigment is used in the form of a powder, filtercake or press cake.

4. The process as claimed in one or more of claims 1 to 3, wherein the finishing treatment with ionic liquids is carried out at a temperature in the range from 25 to 280°C.

5. The process as claimed in one or more of claims 1 to 4, wherein the finishing treatment with ionic liquids is carried out at a temperature in the range from 80 to 200°C.

6. The process as claimed in one or more of claims 1 to 5, wherein the weight ratio of ionic liquid:pigment is in the range from 0.5:1 to 30:1.

7. The process as claimed in one or more of claims 1 to 6, wherein the duration of the finishing treatment is from 10 minutes to 10 hours.

8. The process as claimed in one or more of claims 1 to 7, wherein the finishing treatment is carried out in the presence of water or an organic solvent.

9. The process as claimed in claim 8, wherein the amount of water or organic solvent is from 1 to 90% by weight, based on the total amount of the pigment suspension.

10. The process as claimed in one or more of claims 1 to 9, wherein the pigment is an azo pigment or a polycyclic pigment.

## Revendications

1. Procédé pour le post-traitement de pigments organiques, **caractérisé en ce qu'**on laisse agir le pigment brut organique le cas échéant broyé et un ou plusieurs liquides ioniques l'un sur l'autre.

2. Procédé selon la revendication 1, **caractérisé en ce que** le liquide ionique présente la formule générale
[A]ₙ⁺[B]ⁿ⁻
où
n = 1, 2 ou 3 et
[B]ⁿ⁻ représente un anion organique ou inorganique, choisi dans le groupe halogénure, borate, phosphate, phosphonate, antimoniate, arséniate, zincate, cuprate, aluminate, carbonate, alkylcarbonate, alkylsulfonate, sulfate, alkylsulfate, alkyléthersulfate, amide, imide, carbanion et complexe métallique anionique ;
[A]⁺ représente un cation choisi parmi
- des cations d'ammonium de formule générale
[NR¹R²R³R⁴]⁺,
- des cations de phosphonium de formule générale
[PR¹R²R³R⁴]⁺,
- des cations d'imidazolium de formule générale 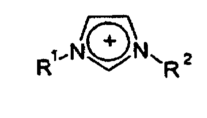 où le noyau d'imidazole peut être substitué par au moins un radical du groupe C₁-C₆-alkyle, C₁-C₆-alcoxy, C₁-C₆-aminoalkyle, C₆-C₁₂-aryle ou C₆-C₁₂-aryl-C₁-C₆-alkyle ;
- des cations de pyrrolidinium de formule générale 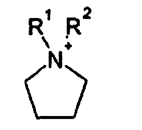
- des cations de pyridinium de formule générale 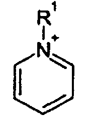 où le noyau de pyridine peut être substitué par au moins un radical du groupe C₁-C₆-alkyle, C₁-C₆-alcoxy, C₁-C₆-aminoalkyle, C₆-C₁₂-aryle ou C₆-C₁₂-aryl-C₁-C₆-alkyle ;
- des cations de pyrazolium de formule générale 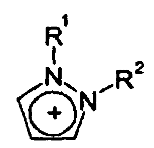 où le noyau de pyrazole peut être substitué par au moins un radical du groupe C₁-C₆-alkyle, C₁-C₆-alcoxy, C₁-C₆-aminoalkyle, C₆-C₁₂-aryle ou C₆-C₁₂-aryl-C₁-C₆-alkyle ;
- des cations de triazolium de formule générale 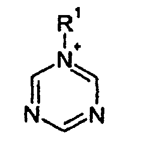 où le noyau de triazole peut être substitué par au moins un radical du groupe C₁-C₆-alkyle, C₁-C₆-alcoxy, C₁-C₆-aminoalkyle, C₆-C₁₂-aryle ou C₆-Cₗ₂-aryl-C₁-C₆-alkyle ;
- des cations de guanidinium de formule générale 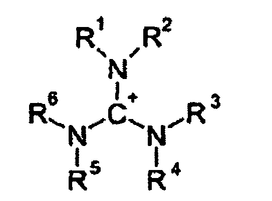
- des cations d'iso-uronium de formule générale 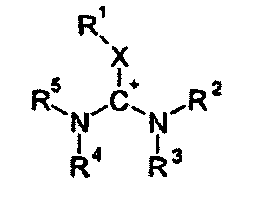 où
X est choisi dans le groupe oxygène et soufre
- et les radicaux R¹, R², R³, R⁴, R⁵, R⁶ sont choisis, indépendamment les uns des autres, dans le groupe formé par :
- hydrogène,
- des groupes alkyle linéaires ou ramifiés, saturés ou insaturés, aliphatiques ou alicycliques, comprenant 1 à 20 atomes de carbone,
- des groupes hétéroaryle comprenant 3 à 8 atomes de carbone dans le radical hétéroaryle et au moins un hétéroatome choisi parmi N, O et S, qui peut être substitué par au moins un groupe choisi parmi les groupes C₁-C₆-alkyle et/ou les atomes d'halogène ;
- des groupes aryle comprenant 6 à 12 atomes de carbone dans le radical aryle, qui peuvent le cas échéant être substitués par au moins un groupe C₁-C₆-alkyle et/ou un atome d'halogène.

3. Procédé selon la revendication 1 ou 2, **caractérisé en ce que** le pigment brut est utilisé sous forme d'une poudre, d'un gâteau de filtre ou d'un gâteau pressé.

4. Procédé selon l'une ou plusieurs des revendications 1 à 3, **caractérisé en ce que** le post-traitement avec des liquides ioniques est réalisé à une température entre 25 et 280°C.

5. Procédé selon l'une ou plusieurs des revendications 1 à 4, **caractérisé en ce que** le post-traitement avec des liquides ioniques est réalisé à une température entre 80 et 200°C.

6. Procédé selon l'une ou plusieurs des revendications 1 à 5, **caractérisé en ce que** la quantité pondérale liquide ionique:pigment est située entre 0,5:1 et 30:1.

7. Procédé selon l'une ou plusieurs des revendications 1 à 6, **caractérisé en ce que** la durée du post-traitement est de 10 minutes à 10 heures.

8. Procédé selon l'une ou plusieurs des revendications 1 à 7, **caractérisé en ce que** le post-traitement est réalisé en présence d'eau ou de solvant organique.

9. Procédé selon la revendication 8, **caractérisé en ce que** la quantité d'eau ou de solvant organique est de 1 à 90% en poids, par rapport à la quantité totale de la suspension pigmentaire.

10. Procédé selon l'une ou plusieurs des revendications 1 à 9, **caractérisé en ce que** le pigment est un pigment azo ou un pigment polycyclique.
